# EUROPEAN PATENT APPLICATION

(11) **EP 4 202 212 A1**
(43) Date of publication of application: **28.06.2023**
(21) Application number: 21306867.9
(22) Date of filing: 21.12.2021
(51) Int. Cl.: F03D 13/25, B63B 1/12, B63B 35/44

(54) **FLOATING WIND PLATFORM AND ASSOCIATED FLOATING WIND ASSEMBLY**

(71) Applicant: TotalEnergies OneTech, 92400 Courbevoie (FR)
(72) Inventor: Le-Guennec, Stéphane, 78380 BOUGIVAL (FR)
(74) Representative: Lavoix

(57) **Abstract**

The invention concerns a floating wind platform able to be placed on a body of water and comprising:
- a floater structure (28) able to float on the body of water;
- a tower assembly (30) protruding from the floater structure (28) and extending along a main direction (Z), the tower assembly (30) being able to support a wind turbine nacelle.

The tower assembly (30) comprises:
- a tower (38) able to support the wind turbine nacelle; and
- a connection part (40) arranged between the floater structure (28) and the tower (38). The connection part (40) is formed of a composite material.

## Description

The present invention concerns a floating wind platform.

The invention also concerns an assembly comprising such a floating wind platform.

A floating wind platform conventionally comprises a turbine, positioned at the end of a tower, which is itself connected at the other end, to a floater structure able to float on a sea for example. The tower is usually made of steel to provide enough resistance.

The turbine comprises a propeller able to be rotated by the wind in order to operate an electrical generator. The rotation of the propeller generates cyclic excitations due notably to the passage of the blades of the propeller in front of the tower. When the frequency of these excitations becomes too close to the structural natural frequencies of the assembly, these excitations may trigger and maintain a resonance and thus an accelerated degradation of this assembly due to fatigue damage.

While designing the floating wind platform, it is therefore essential to adjust the design of the hull and the tower to reduce the resonance effect of the tower while maintaining sufficient strength capacity to withstand the extreme bending moment in the tower induced by the hull acceleration and turbine thrust force.

The towers are usually designed to have the first natural mode between the so-called 1P frequency (corresponding to one rotor rotation) and the so-called 3P frequency (corresponding to each blade passing the tower). In the design process, at least 10% margin is usually required between the tower first natural period and the 3P Frequency to mitigate the resonance effect.

However, compared to land-based wind turbines, the natural period of the tower increases when the wind turbine is placed on a floater and moves towards the 3P excitation frequency, leading to resonance effect and therefore large fatigue damage in the tower and at the interface between the tower and the hull.

Moreover, as the turbine becomes larger in the industry, for example providing an electrical power greater than 14MW, the rotation speed is reduced to limit the wind relative velocity at the extremity of the blades to mitigate erosion and avoid supersonic flow. Such lower rotation speed reduces the 3P frequency, which makes the assembly design and compliance to the above 10% criterion even more challenging and limits the potential optimization of the assembly design.

In order to reduce the natural frequency of the tower, it has been considered to reduce the tower stiffness. However, reducing the tower stiffness by adjusting the tower diameter and wall thickness has some limitation due to the strength capacity requirement in extreme conditions.

FR 3098555 suggests using an elastomer pad damping system between the tower and the hull. However, such a system is very complex and expensive to implement. In particular, the suggested interface will make use of massive steel casting and/or forging that are known to be expensive. Up to the present day, such a system has never been implemented on a real offshore wind turbine site due to these limitations.

One of the aims of the present invention is therefore to provide a floating wind platform assuring a sufficient separation between the tower first natural period and respectively the 1P frequency and the 3P frequency, while providing adequate resistance and integrity during the whole service life of the turbine and being cost efficient.

For this purpose, the invention relates to a floating wind platform able to be placed on a body of water and comprising: a floater structure able to float on the body of water; and a tower assembly protruding from the floater structure and extending along a main direction, the tower being able to support a wind turbine nacelle; the tower comprising : a tower able to support the wind turbine nacelle; and a connection part arranged between the floater structure and the tower, the connection part being formed of a composite material.

Indeed, using these features, the connection part made of composite material instead of steel enables to reduce the natural period of the tower to acceptable value. Indeed, the composite material may present six times less stiffness than steel for an equivalent strength capacity. In particular, the height of the connection part may be adjusted to reduce the natural period of the tower in bending to enhance the margin with the 3-P frequency and reduce fatigue damage. As an example, some calculations made by the inventors have demonstrated that a 3.5 m high connection part will lead to approximatively 10% reduction in the natural frequency of the tower, which is very beneficial for fatigue performance and for platform design optimization. Moreover, this connection part in composite material is simple to manufacture and the interface with the floater structure is simplified. The invention provides therefore a cost effective solution to the resonance/fatigue issue.

The platform according to the invention comprises one or more of the following features, taken solely, or according to any technical feasible combination:
- the connection part extends along the main direction on a length comprised between 1 m and 7 m, notably between 3 m and 4 m;
- the connection part presents a cylindrical shape or a tronconical shape;
- the connection part extends in the continuation of the tower along the main direction;
- the connection part is made of a single material;
- the single material is a fiber reinforced polyester resin or epoxy resin, in particular glass fiber, carbon nanotube or carbon fiber, optionally in the form of woven or non-woven fabric or bulk fiber;
- the composite material may be coated with paint to prevent degradation from the environment such as ultraviolet radiation and/or saline water;
- the tower is made of steel;
- the floater structure comprises a floater and a transition part protruding from the floater, the connection part being arranged between the transition part and the tower;
- the transition part extends along the main direction on a length comprised between 40 cm and 20 m;
- the connection part is fixed to the transition part through a bolted flange; or
- the connection part is grouted to the transition part; and
- the connection part is fixed to the tower through a bolted flange.

The invention further concerns an assembly comprising a floating wind platform as defined above and a wind turbine nacelle comprising an electrical generator coupled to a propeller, the wind turbine nacelle being fixed to the tower of the tower.

According to some embodiments, the electrical generator is able to produce an electric current presenting a power greater than 10 MW, and notably greater than 14 MW.

The invention will be better understood, upon reading of the following description, given solely as an example, and made in reference to the appended drawings, in which:
- Figure 1 is a schematic view of a floating wind assembly comprising a floating wind platform according to the invention;
- Figure 2 is a partial cross section view of the floating wind platform of Figure 1, according to an embodiment, and
- Figure 3 is a partial cross section view of the floating wind platform of Figure 1, according to another embodiment.

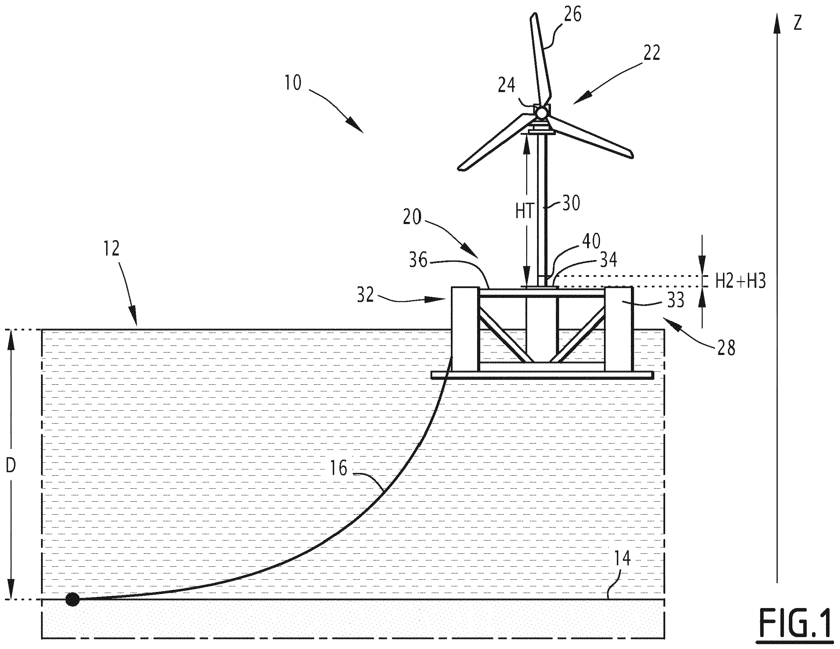

A floating wind assembly 10 is shown on figure 1.

The floating wind assembly 10 is able to be placed on a body of water 12.

In particular, the body of water 12 is for example a sea. The body of water 12 lies on a sea ground 14. The skilled person will understand that when the body of water 12 is a lake, the sea ground 14 is then the ground of the lake.

As visible in figure 1, the body water 12 presents a water depth D, according to a vertical direction, comprised between 50 m and 1500 m.

In particular, the floating wind assembly 10 is able to be moored to the sea ground 14. To this end, the floating wind assembly 10 is able to be attached to the sea ground 14 through at least one mooring line 16, advantageously three mooring lines 16.

The floating wind assembly 10 comprises a floating wind platform 20 and a wind turbine nacelle 22.

The wind turbine nacelle 22 comprises an electrical generator 24 coupled to a propeller 26.

When the floating wind assembly 10 is moored to the sea ground 14 on the operating site, the propeller 26 is configured to rotate in order to operate the generator 24, which produces then electricity.

The electrical generator 24 is able to produce an electric current presenting a power greater than 10 MW, and notably greater than 14 MW.

As represented on Figure 1, the floating wind platform 20 comprises a floater structure 28 and a tower assembly 30 protruding from the floater structure 28.

The tower assembly 30 extends along a main direction Z. The main direction Z is approximately vertical when the floating wind assembly 10 is placed on the body of water 12.

The floater structure 28 is able to float on the body of water 12.

The floater structure 28 comprises a buoyancy element 32.

The floater 32 comprises here three stabilizing columns 33 interconnected through beams. However, the floater 32 may comprise two stabilizing columns 33, or more than three stabilizing columns 33. The floater 32 may also be any type of floating system enabling to float on the body of water 12 and support the tower assembly 30.

The floater structure 28 further comprises advantageously a transition part 34.

The transition part 34 is protruding from the buoyancy element 32.

In particular, the buoyancy element 32 presents an upper surface 36 when the buoyancy element 32 is placed on the body of water 12. The transition part 34 is then protruding upwards from the upper surface 36, along the main direction Z.

The transition part 34 presents a cylindrical shape or a tronconical shape.

The transition part 34 is advantageously made of steel.

The transition part 34 extends along the main direction Z on a length H3 advantageously comprised between 40 cm and 20 m.

The tower assembly 30 protrudes from the floater structure 28, along the main direction Z.

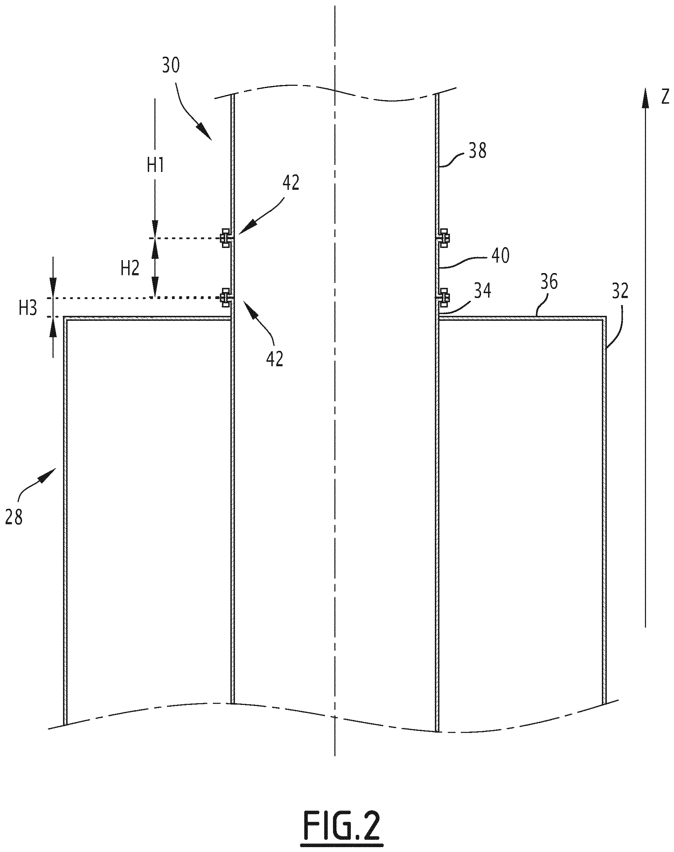

As represented on Figure 2, the tower assembly 30 is protruding from the transition part 34 of the floater structure 28, along the main direction Z.

In a variant, not shown, the floater structure 28 is devoid of a transition part and the tower assembly 30 is protruding directly from the buoyancy element 32.

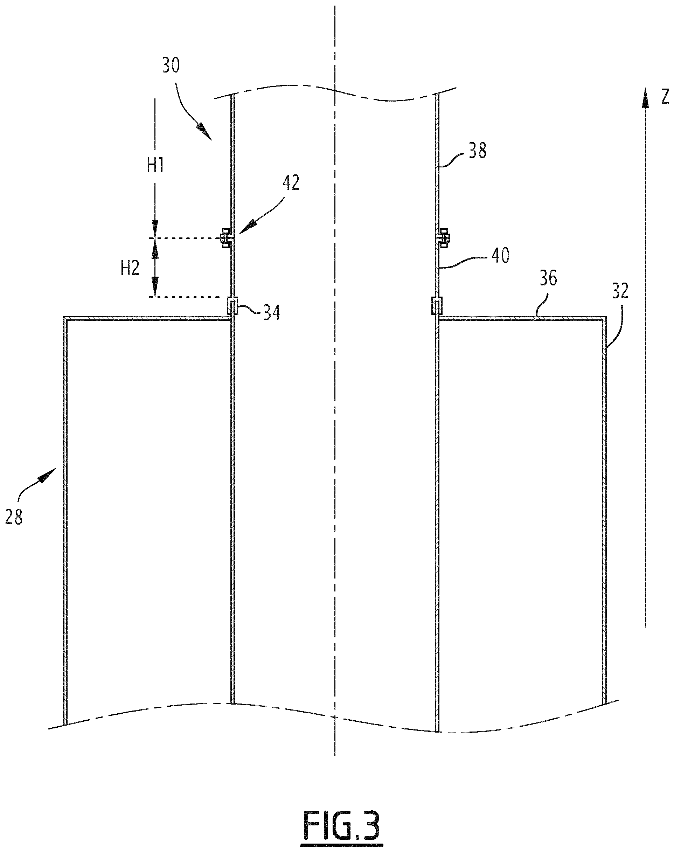

As represented on Figures 2 and 3, the tower assembly 30 comprises a tower 38 and a connection part 40.

In reference to Figures 1 and 2, the tower assembly 30 extends along the main direction Z on a total length HT.

The tower 38 extends along the main direction Z on a length H1.

The connection part 40 extends along the main direction Z on a length H2.

The total length HT is equal to the sum of length H1 and length H2.

In particular, the tower 38 extends along the main direction Z on a length H1 comprised between 80 m and 150 m.

For example, when the electrical generator 24 presents a power of 10 MW, length H1 is typically equal to 95 m. When the electrical generator 24 presents a power of 15 MW, length H1 is typically equal to 125 m. When the electrical generator 24 presents a power of 20 MW, length H1 is typically equal to 135 m.

In particular, the connection part 40 extends along the main direction Z on a length H2 comprised between 1 m and 7 m, notably between 3 m and 4 m.

The tower 38 and the connection part 40 presents each a cylindrical shape or a tronconical shape.

The tower 38 is able to support the wind turbine nacelle 22 at one end and to be fixed to the connection part 40 on the other end, along the main direction Z.

In an embodiment, the tower 38 is made of steel.

In a variant, the tower 38 is made of a polymeric materials including fibers.

The connection part 40 is arranged between the floater structure 28 and the tower 38.

In particular, the connection part 40 is fixed at one end to the tower 38 and to the other end to the floater structure 28, advantageously to the transition part 34.

As represented on Figures 2 and 3, the connection part 40 is fixed to the tower 38 through a bolted flange 42.

The connection part 40 and the tower 38 form two axially consecutive component parts. Each part presents a circular disc-shaped flange. Bolt holes are arranged in each circular disc-shaped flange and are preferably regularly spaced around the flange. The two circular disc-shaped flanges face each other and bolts passing through the holes fix the two parts 38, 40 together, wherein bolts are connected with nuts.

The bolts and nuts are made of optionally stainless steel or advantageously of a composite material. Advantageously, the bolts and nuts are made of the same material as the connection part 40.

On the other side of the connection part 40, as shown on Figure 2, the connection part 40 is advantageously also fixed to the transition part 34 through a bolted flange 42.

In a variant, as shown on Figure 3, the connection part 40 is grouted to the transition part 34. In particular, the connection part 40 presents a clamp shape end and the connection part is assembled with the transition part 34 by deformation of the clamp shape end on the transition part 34.

The connection part 40 extends in the continuation of the tower 38 along the main direction Z.

That is to say, there is a smooth connection between the tower 38 and the connection part 40 along the main direction Z, without a discontinuity.

The connection part 40 is formed of a composite material.

A composite material is an assembly of at least two immiscible components, but with a high penetration capacity. The properties of the different components complement each other and so the new heterogeneous material thus formed presents properties that the components alone do not possess.

A structural composite material is generally composed of a reinforcement and a matrix. The reinforcement, advantageously in fibrous or filamentary form, provides the essential mechanical properties.

The matrix acts as a binder to protect the reinforcement from the environment, to maintain it in its initial position and to ensure the transmission of forces. Composite materials can be classified according to the nature of their matrix: organic matrix composite material, ceramic matrix composite material or metal matrix composite material.

In the present invention, the composite material is preferably comprising an organic matrix, which is coating an inorganic reinforcement. The organic matrix is a polymeric material such as a polyolefin, a polyamide, a polyester or an epoxy resin. The organic matrix is preferably chosen among epoxy and polyester resins. The reinforcement material is an inorganic material in the form of fibers. Suitable reinforcement material comprises short or long glass fibers, carbon nanotubes and/or carbon fibers.

Advantageously, the composite material is made of polyester and glass.

In a variant, the composite material is advantageously made of epoxy and glass. The connection part 40 is advantageously made of a single material.

Therefore, in this embodiment, the connection part 40 is devoid of other materials or mechanical pieces in addition to the composite material. The connection part 40 only comprises the composite material arranged between the tower 38 and the buoyancy element 32.

In a variant, the connection part 40 comprises an inner layer made of steel and an outer layer made of the composite material.

The width of the inner layer and the width of the outer layer may be adjusted to reduce the natural period of the assembly to a target value, between the 1 P and the 3P frequencies.

The composite material is advantageously a fiber reinforced polyester resin or epoxy resin, in particular with glass, carbon nanotube or carbon fiber reinforcement. Reinforcement may be in the form of bulk fibers or preferably as woven or non-woven fabric reinforcement.

Conventionally, a transition piece is arranged between the hull and the tower and is made of steel. However, as explained above, conventional steel towers may lead to a tower assembly 30 first natural period too close of the 3P frequency.

The Young modulus of the composite material may be at least 4 times softer than steel. Considering the increase of wall thickness to achieve equivalent strength capacity, the effective cross-sectional stiffness of the connection part 40 in composite material may be at least 3 times softer than for steel material.

The invention enables to arrange a less stiff part in the tower assembly 30 and by adjusting the height of this connection part 40 in composite material, it is possible to reach the target in term of natural frequency and mitigate the resonance effect and thus fatigue damage.

In particular, the height of the connection part H2 is adjusted to reduce the natural period of the tower assembly 30 to a target value, between the 1P and the 3P frequencies.

In the embodiment in which the connection part 40 comprises an inner layer made of steel and an outer layer made of the composite material, the natural period is adjusted by adapting both on one hand the width of the inner layer and the width of the outer layer and on the other hand the height of the connection part H2.

Some calculations made by the inventors have demonstrated that a connection part 40 presenting a height of 3,5m leads to 10% reduction in the natural frequency of the tower assembly 30, which is beneficial for the floater design and for fatigue performance.

The composite material also enables to provide additional structural damping to the assembly 10.

Moreover, the composite material avoids corrosion issues of the tower assembly 30. There is no more need of a coating on the connection part 40as for a steel connection part for example. However, a coating may be desired if the composite material, which is used is sensitive to degradation from ultraviolet irradiation and/or saline water. In this case, an appropriate coating may be a cheaper paint since it will necessitate lower performances than an anti-rust paint used for steel coating suitable for use in marine environment.

It appears clear that the invention has a number of advantages.

In particular, as explained above, the invention enables to provide a floating wind platform presenting a first natural period sufficiently away from the 1P frequency and from the 3P frequency.

In particular, the connection part 40 made of composite material enables to reduce the natural period of the tower to an acceptable value.

The composite material being less stiff than steel, the height of the connection part 40 may be adjusted to reduce the natural period of the tower assembly 30 depending on the overall design of the platform 10 and on the external conditions, which may influence the natural period of the tower.

Moreover, the invention ensures and adequate resistance and integrity during the whole service life of the floating wind assembly 10.

Finally, this connection part 40 in composite material is simple to manufacture and the interface with the floater structure 28 is simplified.

The invention provides therefore a cost effective solution to the resonance issue.

## Claims

1. Floating wind platform (20) able to be placed on a body of water (12) and comprising:
- a floater structure (28) able to float on the body of water (12) ; and
- a tower assembly (30) protruding from the floater structure (28) and extending along a main direction (Z), the tower assembly (30) being able to support a wind turbine nacelle (22); the tower assembly (30) comprising :
+ a tower (38) able to support the wind turbine nacelle (22); and
+ a connection part (40) arranged between the floater structure (28) and the tower (38), the connection part (40) being formed of a composite material.

2. Floating wind platform (20) according to claim 1, wherein the connection part (40) extends along the main direction (Z) on a length (H2) comprised between 1 m and 7 m, notably between 3 m and 4 m.

3. Floating wind platform (20) according to claim 1 or 2, wherein the connection part (40) presents a cylindrical shape or a tronconical shape.

4. Floating wind platform (20) according to any one of the preceding claims, wherein the connection part (40) extends in the continuation of the tower (38) along the main direction (Z).

5. Floating wind platform (20) according to any one of the preceding claims, wherein the connection part (40) is made of a single material.

6. Floating wind platform (20) according to any one of the preceding claims, wherein the composite material is a fiber reinforced polyester resin or epoxy resin, in particular glass, carbon nanotube or carbon fiber, wherein the fiber reinforcement is optionally in the form of woven or non-woven fabric or in the form of bulk fiber.

7. Floating wind platform (20) according to any one of the preceding claims, wherein the tower (38) is made of steel.

8. Floating wind platform (20) according to any of one of the preceding claims, wherein the floater structure (28) comprises a buoyancy element (32) and a transition part (34) protruding from the buoyancy element (32), the connection part (40) being arranged between the transition part (34) and the tower (38).

9. Floating wind platform (20) according to claim 8, wherein the transition part (34) extends along the main direction (Z) on a length (H3) comprised between 40 cm and 20 m.

10. Floating wind platform (20) according to claim 9, wherein the connection part (40) is fixed to the transition part (34) through a bolted flange (42).

11. Floating wind platform (20) according to claim 9, wherein the connection part (40) is grouted to the transition part (34).

12. Floating wind platform (20) according to any one of claims 9 to 11, wherein the connection part (40) is fixed to the tower (38) through a bolted flange (42).

13. Floating wind assembly (10) comprising :
- a floating wind platform (20) according to any one of the preceding claims;
- a wind turbine nacelle (22) comprising an electrical generator (24) coupled to a propeller (26), the wind turbine nacelle (22) being fixed to the tower (38) of the tower assembly (30).

14. Floating wind assembly (10) according to claim 13, wherein the electrical generator (24) is able to produce an electric current presenting a power greater than 10 MW, and notably greater than 14 MW.
